# EUROPEAN PATENT SPECIFICATION

(11) **EP 3 117 556 B1**
(45) Date of publication and mention of the grant of the patent: **29.07.2020**
(21) Application number: 15760647.6
(22) Date of filing: 10.03.2015
(51) Int. Cl.: H04L 29/06

(54) **A SYSTEM AND METHOD FOR DETECTING INTRUSIONS THROUGH REAL-TIME PROCESSING OF TRAFFIC WITH EXTENSIVE HISTORICAL PERSPECTIVE**
SYSTEM UND VERFAHREN ZUR DETEKTION VON EINDRINGUNGEN DURCH ECHTZEITVERARBEITUNG VON DATENVERKEHR MIT UMFANGREICHER HISTORISCHER PERSPEKTIVE
SYSTÈME ET PROCÉDÉ DE DÉTECTION D'INTRUSIONS PAR TRAITEMENT EN TEMPS RÉEL DE TRAFIC AVEC UNE PERSPECTIVE HISTORIQUE ÉTENDUE

(30) Priority: 11.03.2014 US 201461951185 P
(43) Date of publication of application: 18.01.2017
(73) Proprietor: Vectra AI, Inc., San Jose, California 95128 (US)
(72) Inventor: TAVAKOLI, Oliver Kourosh, San Jose, California 95128 (US); MA, Tao, San Jose, California 95128 (US); HUANG, Panning, San Jose, California 95128 (US); VENABLE, Jeffrey Charles, San Jose, California 95128 (US)
(74) Representative: Nordmeyer, Philipp Werner
(86) International application number: PCT/US2015/019779
(87) International publication number: WO 2015/138506

(56) References cited:
- EP-A2- 1 319 285
- US-A1- 2003 028 552
- US-A1- 2005 210 533
- US-A1- 2013 100 958
- 'RENESAS RX63N Group Zero-Copy Ethemet Driver Demonstration', [Online] 2012, XP055223787 Retrieved from the Internet: <URL:http://documentation.renesas.com/doc/p roducts/mpumcu/apn/rx/r01an1190eu0100_rx63n .pdf> [retrieved on 2015-05-18]

## Description

### Background

In recent years, it has become increasingly difficult to detect malicious activity carried on networks. The volume of traffic moving through a given network node on modern networks is substantially larger than even in the recent past, making it more difficult to assess whether any particular portion of the data conveyed will cause harm. Further, the sophistication of attacks has increased substantially, as entities with greater resources, such as organized crime and state actors, have directed resources towards developing new modes of attack. In addition, modern networking equipment has massively increased the rate at which packets are being generated and received in a typical computing system.

Many existing intrusion detection systems fail to efficiently and effectively assess network traffic and to maintain sufficient state to be able to determine that a client or server machine on the network has been breached. This is particularly problematic given the need to perform intrusion detection at both (a) desired levels of accuracy and (b) fast enough rates to handle the real-time speeds of modern networking equipment.

Therefore, there is a need for an improved approach to implement intrusion detections.

### Summary

The claimed invention relates to a method, a system and a computer program product as defined in independent claims 1, 8 and 9, respectively.

Various embodiments are defined in the dependent claims.

### Brief Description of the Drawings

The drawings illustrate the design and utility of some embodiments of the present invention. It should be noted that the figures are not drawn to scale and that elements of similar structures or functions are represented by like reference numerals throughout the figures. In order to better appreciate how to obtain the above-recited and other advantages and objects of various embodiments of the invention, a more detailed description of the present inventions briefly described above will be rendered by reference to specific embodiments thereof, which are illustrated in the accompanying drawings. Understanding that these drawings depict only typical embodiments of the invention and are not therefore to be considered limiting of its scope, the invention will be described and explained with additional specificity and detail through the use of the accompanying drawings in which:
Fig. 1A-C illustrate systems and flows for implementing intrusion detection according to embodiments of the invention.
Fig. 2 shows a flowchart of an approach to operate a flow engine according to some embodiments of the invention.
Fig. 3 shows a flowchart of an approach to perform real-time processing according to some embodiments of the invention.
Fig. 4 shows a flowchart of an approach to perform near-real-time processing according to some embodiments of the invention.
Fig. 5 shows a flowchart of an approach to perform correlation processing according to some embodiments of the invention.
Fig. 6 shows a flowchart of an approach to perform scoring/publishing according to some embodiments of the invention.
Fig. 7 shows a flowchart of an approach to perform host processing identification/scoring according to some embodiments of the invention.
Fig. 8 depicts a computerized system on which an embodiment of the invention can be implemented.

### Detailed Description

Various embodiments of the invention are directed to a method, system, and computer program product for detecting network intrusions. Other objects, features, and advantages of the invention are described in the detailed description, figures, and claims.

Various embodiments of the methods, systems, and articles of manufacture will now be described in detail with reference to the drawings, which are provided as illustrative examples of the invention so as to enable those skilled in the art to practice the invention. Notably, the figures and the examples below are not meant to limit the scope of the present invention. Where certain elements of the present invention can be partially or fully implemented using known components (or methods or processes), only those portions of such known components (or methods or processes) that are necessary for an understanding of the present invention will be described, and the detailed descriptions of other portions of such known components (or methods or processes) will be omitted so as not to obscure the invention. Further, the present invention encompasses present and future known equivalents to the components referred to herein by way of illustration.

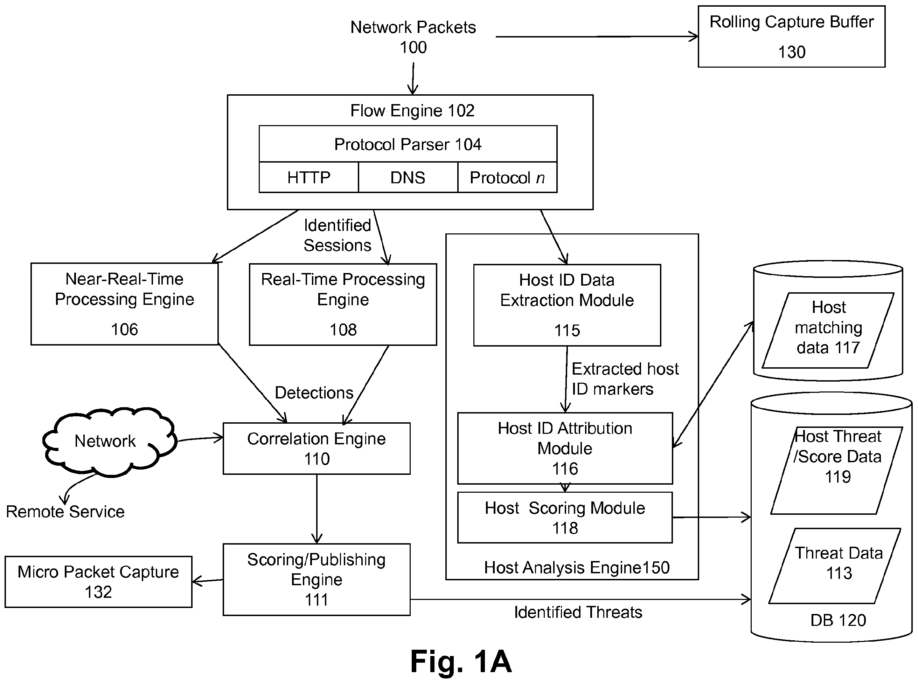

FIG. 1A illustrates an example real-time historical perspective engine or system that can be used to implement intrusion detection, as according to some embodiments. As a high-level overview, the system accepts network packets as input, organizes the packets, and processes them through a series of detection schemes to isolate potentially malicious network behavior. This approach reduces the amount of data that must be analyzed by security administrators and increases detection efficiency and accuracy. For example, in some cases as many as 10 million packets may traverse a network, but all of the packets may still produce as little as a single behavior of interest to be presented to the IT staff. However, by implementing the real-time perspective engine large quantities of network data can be analyzed, reduced, and possible network threats presented at an easy to use interface through which network security administrators may interact. Further, in some embodiments, the system also provides evidence of behaviors that have been detected by creating and storing copies of the network traffic found objectionable (e.g. suspicious), which in some embodiments allows historical perspective to influence the interpretation of detections by security administrators.

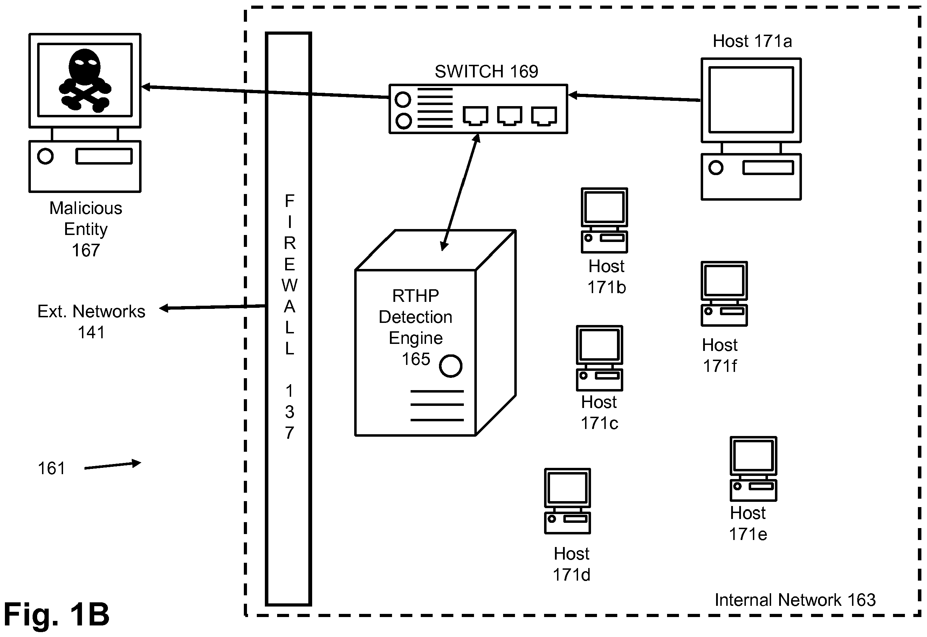

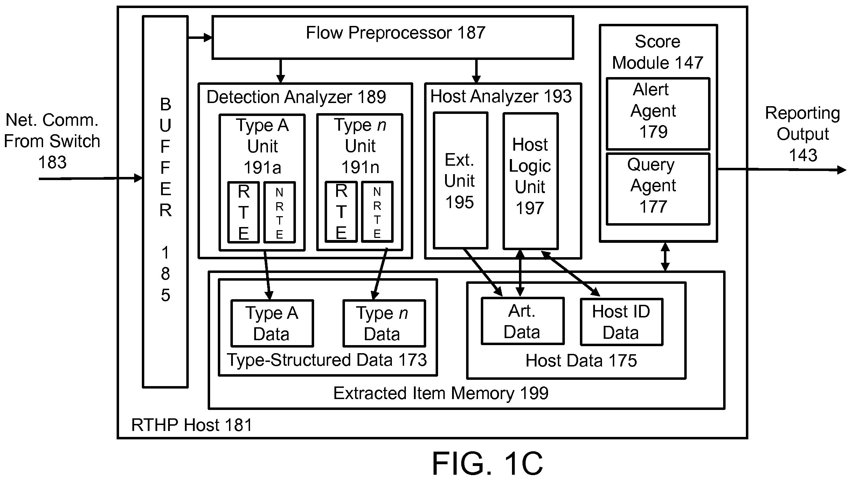

In some embodiments, as illustrated in FIG. 1, network packets 100 (e.g. received network packets) arrive at the system from a SPAN (Switched Port ANalyzer) port or a TAP (Test Access Point) port. The system may passively accept traffic from one or more such ports and may process the packets as illustratively described in more detail below. The flow engine 102 organizes the received packets into unidirectional flows of traffic and one or more session datasets. In some embodiments a session dataset comprises unidirectional flows from a single source to a single destination (though, as one of ordinary skill in the art appreciates, the destination may be a multicast or broadcast address, thus potentially arriving at multiple recipients). In an IP network (which this system is illustratively though not exclusively concerned with), a flow may be minimally identified by a source address, a destination address, and a protocol.

Some protocols (e.g., UDP and TCP) further support the concept of a source port and a destination port, thus leading to the common use of a five-tuple (source IP, destination IP, protocol, source port and destination port) to identify a flow. In some embodiments, a "session" (e.g. session dataset) is a pair of unidirectional flows in opposite directions that make up a typical conversation between two hosts. If a host initiates a flow and receives no flow back in the opposite direction, the result (e.g. a flow in one direction and null flow in the other direction) may be still referred to as a session. Further, the source of a session may be identified as the host that sends the first packet that initiates the session and the target (e.g. target host) to be the destination of that first packet.

In some embodiments, information of interest to the system illustrated in FIG. 1A resides at a higher logical layer than the pure transport characteristics of sessions. In some embodiments, a protocol parser 104 (e.g. a parsing module) parses the payloads contained in the packets to extract information based on the type of payload (e.g. protocol) being analyzed. In some embodiments, each session may also contain additional application-specific payloads. The type of payload to follow the IP (Internet Protocol), UDP (User Datagram Protocol) or TCP (Transmission Control Protocol) header may be hinted or disclosed by the protocol type or the destination port, though it is not uncommon for non-standard ports to be used for a session. The protocol parser 104 understands and dissects (e.g. separates) the application-specific payload of the protocol and extracts one or more fields from the session that downstream components of the system may use to detect potentially malicious sessions. FIG. 1A shows HTTP (HyperText Transfer Protocol) and DNS (Domain Name System) as examples of protocols that might be parsed, but the system is capable of parsing any protocols that it may encounter on a network.

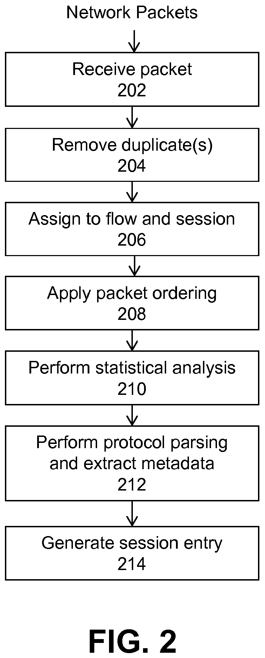

Further details regarding the operation and processing of the flow engine and protocol parsing aspects of the system are described below in conjunction with the description of FIG. 2.

In some embodiments, the processing engines 106 and 108 process some or all the sessions and may also check the traffic for significant anomalies to report. Further, the processing engines 106 and 108 may implement detection schemes (e.g. algorithms designed to look for particular behaviors) to detect significant anomalies. The detection schemes may be state-less or stateful; in either case, the detection algorithms may decide to report something (e.g. one or more preliminary detections).

The Near-Real-Time Processing Engine 106 may implement detection algorithms to detect patterns of behavior that may be benign if they occur in relatively small volumes, but are considered malicious when they occur in larger volumes (e.g. volumes of sufficient size) or in specifically timed sequences of sessions. Generally, these patterns may be observed over relatively short periods of time (e.g. minutes to hours) by examining sessions during a time period in which the same host is the source. Examples of such behaviors include participation in a DDoS (Distributed Denial of Service) attack, undertaking advertising click fraud, sending spam emails, and sending near-identical payloads to multiple other hosts. In some embodiments, the near-real-time detection schemes may also avail themselves of learned (e.g. distilled) models of behavior for a particular host.

The Real-Time Processing Engine 108 may implement detection schemes designed to detect patterns of behavior in single sessions that are considered potentially malicious, even if considered in isolation from other sessions that have preceded or follow the session. The real-time detection schemes (e.g. algorithms) may implement learned (e.g. distilled) models of behavior for a particular host. In some embodiments, these models may be established over days, weeks or months and are not affected by short-term behaviors.

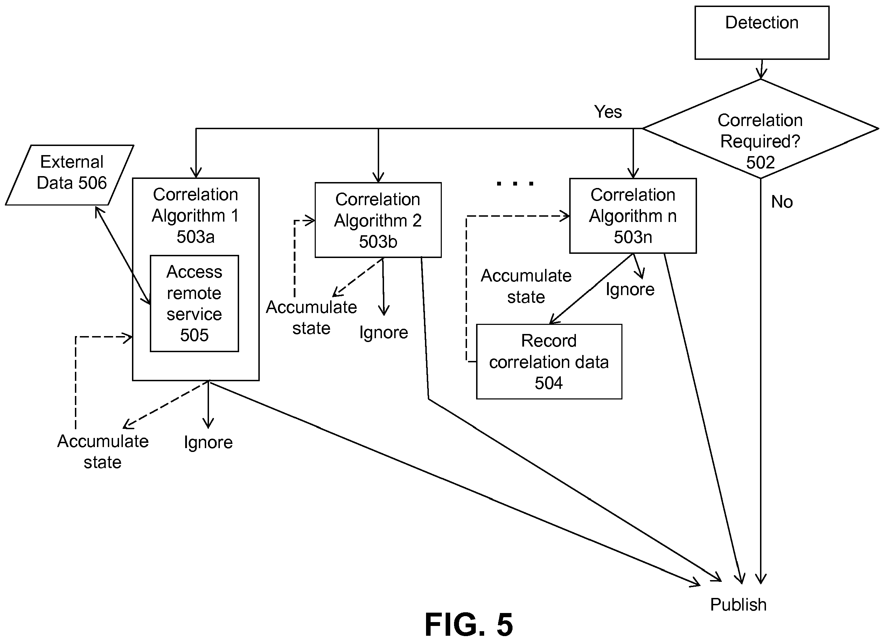

Observations made by real-time or near-real-time detection schemes may be reported as "detections" (e.g. preliminary detection data) to a Correlation Engine 110, which is described in more detail with respect to Fig. 5. In some cases, these detections may represent strong enough signals in their own right to be reported as malicious. In other cases, the detections may need to be correlated with other information before a decision can be made on whether they are likely malicious. The other information used for correlation may include detections made by other (e.g. real-time or non-real-time) schemes at approximately the same time or by active queries made across the network of other sources of information. In some embodiments, the correlation engine 110 may decide whether or not to proceed reporting potential malicious activity to a security administrator using a reporting engine (e.g. scoring/publishing engine 111).

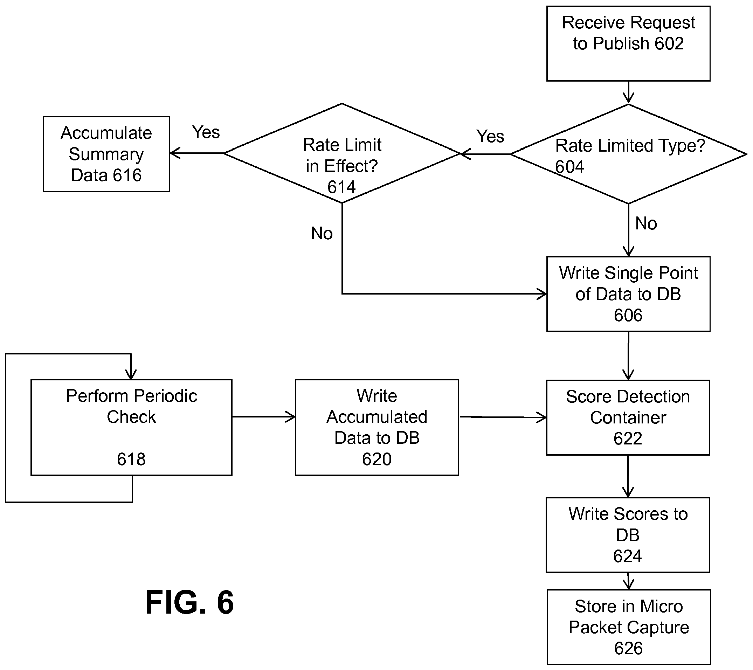

Upon receiving a detection, the scoring/publishing engine 111 (detailed further below with respect to FIG. 6) may rate-limit how often a malicious behavior of a particular type is reported against a particular source host to the threat data portion of the database. If a decision is made to withhold this particular detection, the information about the detection can be combined with information about other detections of the same type and for the same source host that have arrived during the withholding period. Before publishing a detection to the database, recent copies of instances of detections of the same type for the same source host may be passed to a scoring function tasked to rate the collection of behavior for certainty of malicious behavior and the extent of threat of the behavior.

In some embodiments, a threat data 113 portion of the database stores information about the detections reported against the source hosts for which malicious behavior has been reported along with the scores indicating certainty of maliciousness and level of threat for such detection(s).

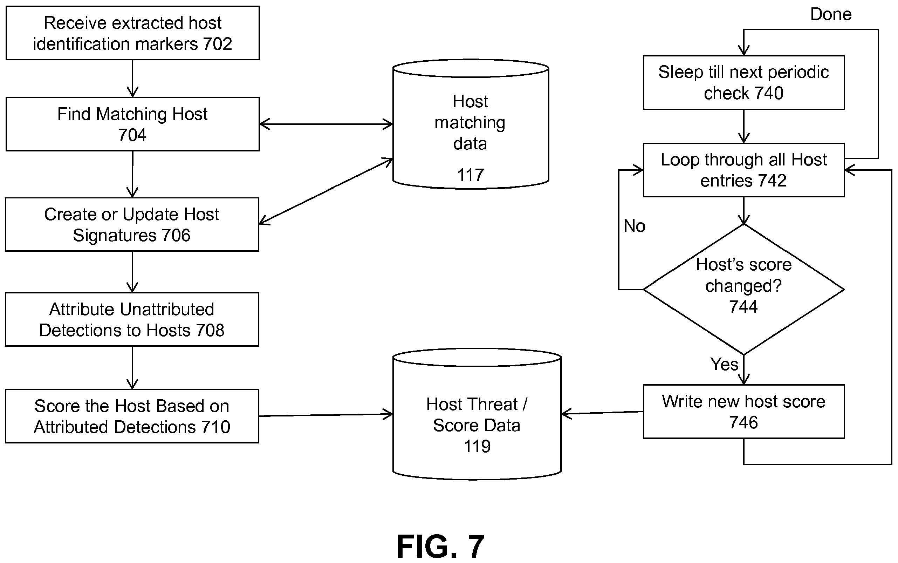

In some embodiments, the system may track behavior of a host over prolonged periods of time (e.g. hours, days, weeks, months). In some cases where an IP address is assigned to a local host for some number of hours or days, the IP address alone may not be the optimal and/or persistent approach for identifying a host for the purpose of attribution of behavior. In some embodiments, a host analysis engine 150 may be implemented for host identification. A Host ID Data Extraction Module 115 may extract artifacts from the network traffic that can aid in the long-term (e.g. week-to-week) identification of hosts. Examples of artifacts include, but are not limited to, packets containing DHCP, MDNS, NetBIOS, and Kerberos packets. Further details about this part of the system are described below with respect to Fig. 7.

In some embodiments, the Host Identity Attribution Engine 116 may perform at least two functions: (a) maintaining a set of artifacts that can be used to identify individual hosts inside the network for which it receives artifacts and (b) using the artifacts received in real-time to match an IP address (e.g. for some period of time, for a pre-selected time period) to a previously seen host identity.

The Host Matching Data 117 is a persistent repository in which the Host Identity Attribution Engine 116 stores the set of artifacts that may be used to identify each host. The Host Scoring Engine or Module 118 considers the totality of accumulated detections for a host and assigns a score for the certainty that the host is under control of a malicious entity (e.g. malicious user/hacker or malicious program) and the threatening nature of the infection. In some embodiments, this task may be performed by taking into account the certainty and threat scores of the individual detections and the last time each detected behavior was reported. Host scores may be recorded when a new detection is attributed to a host as well as when the passage of time indicates that a previously detected behavior has subsided.

In some embodiments, a Host Threat and Score Data 119 portion of the database 120 stores the hosts' scores. In some embodiments, the database 120 includes information about detections of potentially malicious behavior (e.g. Threat Data 113) as well as information about the hosts to which those behaviors are attributed.

In some embodiments, a copy of received packets may be placed in a "rolling capture buffer" 130. This buffer may contain a window (e.g. a time interval on the order of hours to days, or a time interval on the order of hours, days, etc., depending on traffic volume and allocated disk space) of recently received network traffic. As explained above, in some embodiments the network traffic may be received passively through a network switch in a way that does not slow down the network. In some embodiments, a micro packet capture 132 is performed for detections that are published to the database. The resulting file (e.g. a packet capture or "pcap" file) may contain a small number (e.g., as little as one and as many as several hundred) of packets that provide a sample of the detected behavior.

FIG. 1B illustrates an example environment 161 in which a real time historical perspective detection system 165 may be implemented, as according to some embodiments. There, the environment having an example network 163 comprises one or more hosts (e.g. assets, clients, computing entities), such as host entities 171a, 171b, 171c, 171d, 171e, 171f, that may communicate with one another through one or more network devices, such as a network switch 169. The network 163 may communicate with external networks 141 through one or more network border devices as are known in the art, such as a firewall 137. In some embodiments, a malicious entity 167 corresponds to a host or computing entity that attacks computers or hosts in internal network 163. In some embodiments, the malicious entity 167 may correspond to a malicious computing entity that is inside the network environment and is attacking other internal hosts (e.g. 171a, 171b).

In some embodiments, the real time historical perspective detection system 165 enables network traffic to be parsed into session datasets (e.g. sessions between a plurality of hosts) and analyzed to detect network threats and generate host identification and score data. In some embodiments, as illustrated, the real time historical perspective detection system 165 may tap (e.g. TAP/SPAN) the network switch 169 to passively analyze the internal network traffic in a way that does not harm or slow down the network (e.g. by creating a copy of the network traffic for analysis). Though the real time historical perspective detection system is illustrated as a host computer or external module that is coupled to the switch 108, in some embodiments the system may be directly integrated into network components, such as a switch 169 or a firewall 137. While still, in some embodiments the system may be integrated into one or more hosts (e.g. hosts 171a, 171b, 171c, 171d, 171e, 171f) in a distributed fashion (e.g. each host may have its own set instructions, the hosts collectively agree to follow or adhere to the instruction to collect information and report information to one another or a database to collectively work as a intrusion detection engine). Still in some embodiments, the intrusion detection engine may be integrated into a single host (e.g. host 171d) that performs intrusion detection engine actions for the network 163.

FIG. 1C illustrates internal aspects of a real-time historical perspective engine (RTHP) 181, according to some embodiments. At 183, network communications from a switch may be received by RTHP 181 and loaded into a buffer (e.g. rolling buffer) memory structure 185. A flow preprocessor 187 can parse the network traffic using one or more parsing units (not depicted), each of which may be tuned to parse different types of network traffic (e.g. HTTP, TCP). In some embodiments, the flow preprocessor 187 generates session datasets that correspond to communications between two hosts (e.g. between two hosts inside a network or between an external host/entity and an internal host).

The session datasets may be analyzed by a detection analyzer 189, which detects different types of threats or analysis data, and a host analyzer 193, which analyzes the hosts which generated the network traffic. In some embodiments, the detection analyzer 189 and host analyzer 193 may extract one or more data items and store them in an extracted item memory 199.

In particular, the session datasets may be analyzed by a detection analyzer unit 189, which may comprise one or more detection units 191a-191n. In some embodiments, the detection units may contain a real time analysis engine ("RTE") which can identify threats without collecting past data (e.g. accumulating state) and a non-real-time analysis engine ("NRTE"), which generally accumulates data about network events that appear benign, but accumulate to significant threat levels (e.g. DDoS attacks).
In some embodiments, the detection units are customized to analyze the session datasets and extract type-specific data that corresponds to various network threats, attacks, or analysis parameters. For example, detection unit Type A 191a may be designed for detecting relay communication attacks; for every type of relay communication detected, detection unit Type A 191a may store the detection in "Type A" structured data. As a further example, detection unit Type n 191n may be designed to detect bot activity, such that every time a computer or host in the network performs bot-related activities, detection unit Type n may store detection-related data in "Type n" structured data. In some embodiments, the detection data per unit may be stored in a type-structured data 173 portion of memory, which may be partitioned from extracted item memory 199. Further details of an example approaches that can be taken to implement detection are described in: Attorney Docket No. VN-005-US, entitled "Method and system for detecting bot behavior", Ser. No._; Attorney Docket No. VN-006-US, entitled "Method and system for detecting external control of comprised hosts", Ser. No._; Attorney Docket No. VN-009-US, entitled "Method and system for detecting algorithm-generated domains", Ser. No._; Attorney Docket No. VN-010-US, entitled "Detecting network reconnaissance by tracking intranet dark-net communications", Ser. No._ ; and Attorney Docket No. VN-011-US, entitled "Malicious relay detection on networks", Ser. No._.

In some embodiments, the host analyzer 193 comprises an extraction unit 195 and a host logic unit 197. The extraction unit 195 is designed to extract artifacts or identification data (e.g. MAC address, IP address), which may be used to identify a host, and store the extracted data in an artifact data store ("Art. Data") in host data 175. The host logic unit may analyze the extracted artifact data and generate host ID data (e.g. durable host IDs).

In some embodiments, a score module 147 may be implemented to analyze the extracted item memory 199, score the detections in the type-structured data 173, and correlate the detections with host ID data. In some embodiments, the score module 147 can run checks on the type-structured data to determine if any thresholds have been exceeded. In some embodiments, the score module may edit or update the host ID data (e.g. in host data 175) with new detection information. For instance, the score module may correlate newly detected bitcoin mining activity to an existing host ID and update the host ID with further information regarding the recent bitcoin activity. In some embodiments, the score module 147 further comprises an alert agent 179 which can generate alert data if a network attack threshold is exceeded. In some embodiments, the score module 147 comprises a query agent 177 which can retrieve data from the extracted item memory 199 in response to network security administrators or other network security devices. In some embodiments, the score module may generate the alert data or query responses as reporting output 143.

FIG. 2 illustratively describes flow engine processing as according to some embodiments. In some embodiments, the flow engine may be implemented to assemble packets into flows, put multiple (e.g., two) flows together into a session, calculate statistics about the session, parse the payloads of the sessions on an as-needed basis to extract additional information, and/or prepare this information for the detection engines that follow.

Network packets may be received 202 on one or more network interfaces that connect the system to the network. The packets may then be transferred into main memory via a copy mechanism such as a zero-copy driver, as according to some embodiments. Duplicate packets may occur for several reasons, such as: the originating host may re-send a packet because the acknowledgement of the packet becomes lost, or the SPAN or TAP port may include traffic from multiple networks (thus, in some instances, causing some packets to always appear twice).

At 204, the flow engine may detect and discard duplicate packets. At 206, the surviving packets may be assigned to a flow. Depending on the protocols used, the flow entry may be identified by a five-tuple (source IP, destination IP, protocol identifier, source port, destination port) for UDP and TCP or a triple (source IP, destination IP, protocol identifier) for other protocols. In some embodiments, a session may be two unidirectional flows traveling the same path in opposite directions. In this way, a session can be thought of as a bidirectional flow.

Packets may arrive out of order due to queuing issues in routers or, for instance, due to the availability of multiple paths between source and destination. In these cases, at 208 the flow engine may place the packets in the order originally transmitted by the originating host of the flow.

In some embodiments, before the packets that make up the flows (and the sessions to which each pair of flows are matched) are placed in streams for protocol parsing purposes and statistics may be gathered at 210 about the rate of arrival of the packets, the gaps between the packets, the regularity of the size of the packets - and other data which cannot simply be derived from the total number of packets sent and received, the bytes sent and received and the start and end time of the session. The statistics may describe the frequency or averages of the above values (e.g. average packet size, frequency of communications).

After the packets are placed in the correct order, parsers for higher-level protocols (such as HTTP and DNS) may be employed at 212 to identify sessions that carry protocols and to extract the metadata necessary for downstream detection schemes, as according to some embodiments. The calculated statistics, the higher-level protocol and some or all the extracted metadata may be placed into a session entry 214 that can be shared with downstream detection schemes.

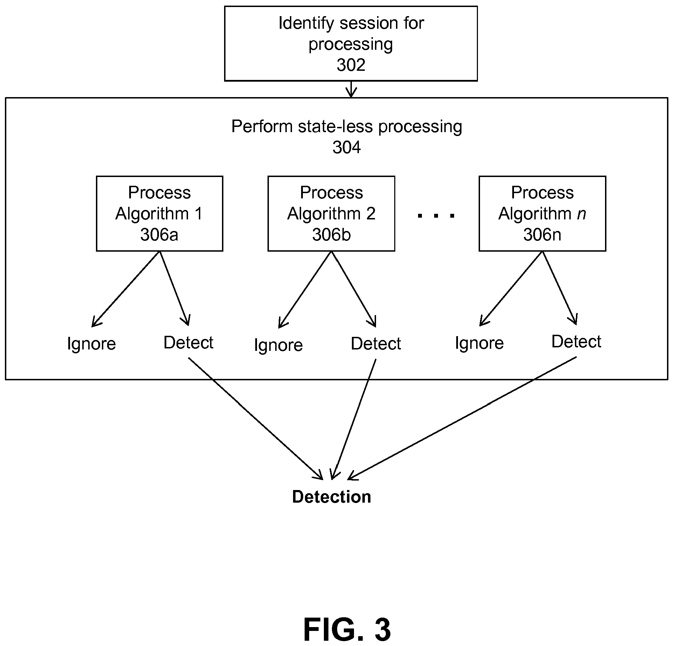

FIG. 3 illustrates real-time processing engine aspects of the system, as according to some embodiments. This part of the system (e.g. 108, FIG. 1A) may comprise real-time detection schemes (e.g. algorithms) that detect behavior that can be recognized in a single session. The detection schemes may process sessions and may decide whether to ignore them (e.g. when they are benign) or trigger a preliminary detection (e.g. when they look potentially malicious).

At 302, one or more detection schemes may be used to identify types of sessions for processing. Some detection schemes identify general sessions to process that are not higher-level protocol specific (e.g. sessions to process regardless of whether the sessions involve certain higher-level protocols), while others are identified that require processing of specific types and attributed (e.g. ones carrying HTTP, DNS, or other protocols). At 304, the real-time detection schemes may perform state-less processing in the sense that they do not need to encounter multiple sessions attributed to one or more specific hosts in order to decide whether a session is likely malicious or not.

In some embodiments, the real-time processing schemes 306a-n process one session at a time. Further, the real-time processing schemes may make determinations whether to ignore the session or to report a preliminary detection. Examples of real-time processing schemes or algorithms include detection of strange User-Agent strings that may carry signs of having been constructed by attackers in HTTP traffic or detection of bitcoin (a virtual online currency) mining behavior which is often associated with monetization schemes a botnet may utilize.

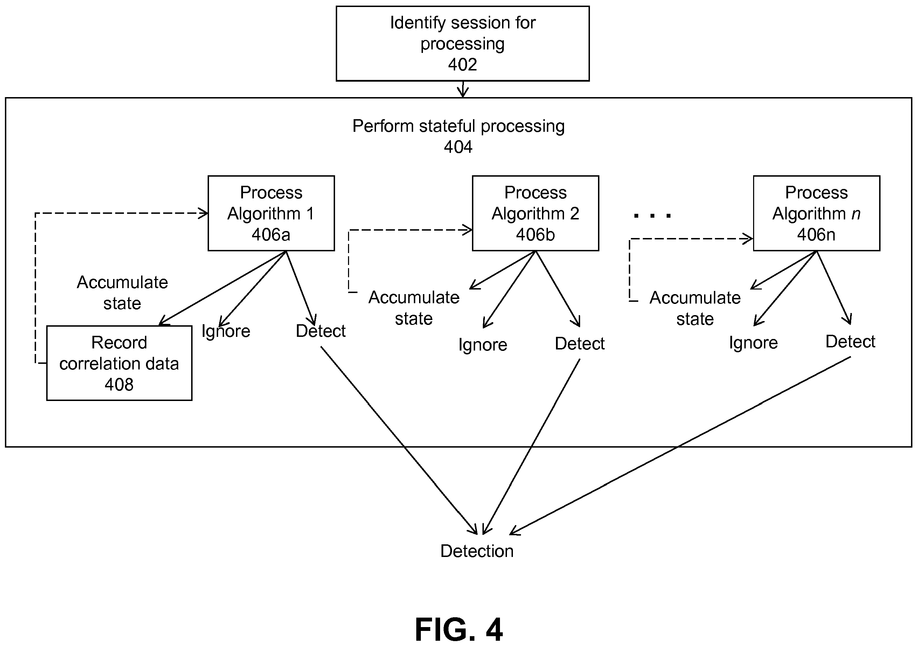

FIG. 4 illustrates near-real-time processing engine features, as according to some embodiments. The near-real time processing engine may implement near-real-time detection schemes (e.g. algorithms) that detect behavior that is recognized over multiple sessions over some span of time. The detection schemes may process sessions and may individually decide whether to ignore the sessions (e.g. if they are not of interest), to accumulate state about them (e.g. if they are of interest, but the threshold set for this type of detection hasn't been reached) in a state accumulator data structure, or to signal a detection (e.g. if the collected state has crossed the threshold).

In some embodiments, each detection algorithm processes certain types of sessions 402. Some deal with sessions regardless of higher-level protocol, others look for specific types of sessions (ones carrying HTTP, DNS, or other protocols). The near-real-time detection algorithms perform stateful processing 404 in the sense that they encounter multiple sessions attributed to a specific host in a certain window of time (e.g. perspective analysis) in order to decide whether the collection of sessions is signaling malicious behavior or not.

In some embodiments, each near-real-time processing algorithm 406a-n processes a session at a time and makes its own decision on whether to ignore the session (because it includes nothing of interest, as when the session contains information disqualifying it for this type of detection scheme), whether to add to state which it is accumulating for a particular internal host (such as incrementing a count of the number of email sessions encountered), and/or to report a preliminary detection related to an accumulated set of sessions (such as when the count of email sessions seen in a set time period has exceeded a threshold), which look like they may signal malicious intent for that host. In some embodiments, each near-real-time processing algorithm accumulates short-term state 408 (e.g. less than 5 minutes, less than an hour, less than 24 hours) as it is looking to detect sustained behavior of a particular kind by a particular host.

FIG. 5 illustrates aspects of the correlation engine. In some embodiments the correlation engine operates by deciding whether a preliminary detection signaled from a real-time or near-real-time algorithm should be reflected in the user interface presented to the IT security staff of the organization where the system is deployed. Once a preliminary detection has been signaled, at 502 a decision is made (by examining the type of detection and the other detections which have been observed for the same host in the recent past) whether the preliminary detection should proceed directly to the scoring and publishing engine or whether it must be combined with other preliminary detections or information external to the system before a decision can be regarding whether or not to proceed to the scoring and publishing step. Preliminary detections that require more processing are passed to one or more correlation algorithms 503a-n.

Each correlation algorithm may process one or more types of incoming preliminary detections arriving during a relatively short time period (e.g. less than a few minutes, less than an hour, less than 24 hours). Some correlation algorithms may also retrieve external information 506 (such as the registration date of a domain name), which may be accomplished by sending one or more requests to an external service and waiting for responses from them 505. The system may provide access to remote services that may be located inside the customer's network (directory services, log data, etc.) or outside the customer's network ("in the cloud"). As mentioned, in some embodiments, the correlation algorithm decides, based at least in part on the set of preliminary detections and information retrieved from outside the system, whether to ignore the preliminary detection, to reflect it in its accumulated state, and/or to signal an actual detection based at least in part on the sum of information it has received (such as the strangeness of the construction of an HTTP request combined with the frequency with which the domain it is associated with is remapped to a new IP address).

Each correlation algorithm may need to accumulate short-term state 504 (e.g. less than a few minutes, less than an hour, less than 24 hours) as it is looking to detect complex behavior of a particular kind and the various elements of this complex behavior do not generally manifest themselves at precisely same instant.

FIG. 6 shows a flowchart of an approach for scoring and publishing, according to some embodiments. This part of the system may control how much information about detections of the same kind is written to the database. In some embodiments, only the detection information is what becomes visible to the IT security staff of the organization in which the system is deployed. In this way, the data about possible threats and/or network intrusions is reduced.

Once the correlation engine has decided to report a detection, the detection transitions from being a preliminary detection to an actual detection 602. Reporting of detection types may be rate-limited to prevent too much (e.g. unnecessary) information from being written to the database 604. If the detection type is rate limited, certain checks can be performed before publishing. The design decision on whether or not to rate limit the publishing of a detection may be based at least in part on the anticipated rate of arrival of the detection and the perceived value to IT security staff of seeing all the details related to a detection. If the detection type is not rate limited, the system may proceed directly to the publishing step and information contained in the single detection is published to the database 606, as according to some embodiments.

In some embodiments, for rate-limited detection types, if there has not been a recent detection of this type for the affected host 614, no rate limit is in effect, and the detection is released for publishing and the current (publish) time is retained as state in the rate limiter. In some embodiments, if there has been a recent detection of this type for this host, then rate limiting is in effect and the detection is accumulated for later publishing.

In some embodiments, what happens next may depend on whether this is the first detection to arrive while the rate limit is in effect 616. If it is, the detection data may be simply buffered. For each subsequent detection note that arrives while the rate limit is in effect, information from the newly arrived detection is combined into the detection data already accumulated, thus resulting in a single "reduced" detection being buffered by the rate limiter for each detection type for each host.

In some embodiments, to flush accumulated information, a periodic check may be performed to see if any accumulated data has been held back for long enough 618. If it has, the data can then be written to the database. In this embodiment, the time at which the data is published may be retained in the rate limiter to ensure the rate limit remains in effect for the next set of detections. And information contained in either a single or a combined set of accumulated detections is published to the database 620.

The detection (e.g. single or accumulated) that has been published to the database can be scored in conjunction with all the other recent detections of the same detection type for the same host 622. In this way, the system is effectively scoring the behavior type for a host at a given point in time based on the recently received detection instances of the same type. A certainty score (the certainty of detection of the observed behavior) and threat score (the threatening nature of the behavior) may be calculated and the scores may be written to the database 624. Optionally, sample capture data corresponding to the detections can also be stored in a micro packet capture 626.

FIG. 7 describes the host matching and scoring mechanism, as according to some embodiments. In some instances, a host may be assigned one IP address one day and another the next day and another one on a wireless network and another one when connecting via a VPN (Virtual Private Network), the host matching mechanism works to stitch the IP addresses that the host inhabits at various points in time into a single durable host identity.

Observing network traffic and extracting host identity "artifacts" may help accomplish host identification, as according to some embodiments. As new artifacts are captured in the Host ID Data Extraction Module 702, they may be passed to an accumulator that maintains a list of all the artifacts seen for a given IP address over a period of time in which the IP address appears to be continually assigned to the same host. Once enough artifacts have arrived, an attempt may be made to match 704 the accumulated artifacts for the IP address to information previously stored as a "host signature" in the Host Matching Data 117.

In some embodiments, if a match is found, the host signature may be updated at 706. In some embodiments, if a match is found and the captured host identity artifacts include data not already present in the host identity signature, the host signature may be updated at 706. In some embodiments, if the host identity artifacts that have been captured match no existing host signature but enough unique host identity artifacts have been captured, a new host signature may be created 706 and stored in the Host Matching Data 117.

In some embodiments, once the IP address during this period of time has been recognized as a specific host, any detections made for the IP address prior to this point may be retroactively attributed to the appropriate host at 708. Future detections that are recorded for this IP address while the same host inhabits the IP address may then be immediately attributed to the identified host.

In some embodiments, the host may be scored 710 either when one or more previously made detections is identified as belonging to the host or when a new detection score is recorded when the host has already been identified. Each host's score takes into account the certainty and threat scores of the individual detections reported against the host and the last time each detected behavior was reported. The calculated host score may be written to the Host Threat/Score Data 119.

In some embodiments, host scores reflect not just the arrival of new detections, but also may reflect the absence of previously seen behavior. To accomplish this, a periodic check (e.g. every 10 minutes, hourly, a pre-selected time interval) may be performed 740 to see whether each host's score ought to change as a result of the passage of time and the absence of detected behavior.

In some embodiments, the system may loop through the entire list of hosts and may calculate each host's current score 742. The host's score reflects observed behavior over a variable window of time (each type of behavior is observed in its own unique time window) and as time passes, the accumulated detections effectively "decay" out of the score. If the host's score has not changed, the system iterates to the next host 744. If it has changed, the new host score is written to the Host Threat/Score Data 746. Further details of an example approach that can be taken to implement host scoring is described in Attorney Docket No. VN-008-US, entitled "A system and method for detecting network intrusions using layered host scoring", Ser. No._, filed on even date herewith, which is hereby incorporated by reference in its entirety. Further details of an example approach that can be taken to implement host identification is described in Attorney Docket No. VN-007-US, entitled "A method and system for generating durable host identifiers using network artifacts", Ser. No._, filed on even date herewith.

Therefore, what has been described is an improved system, method, and computer program product for performing intrusion detections.

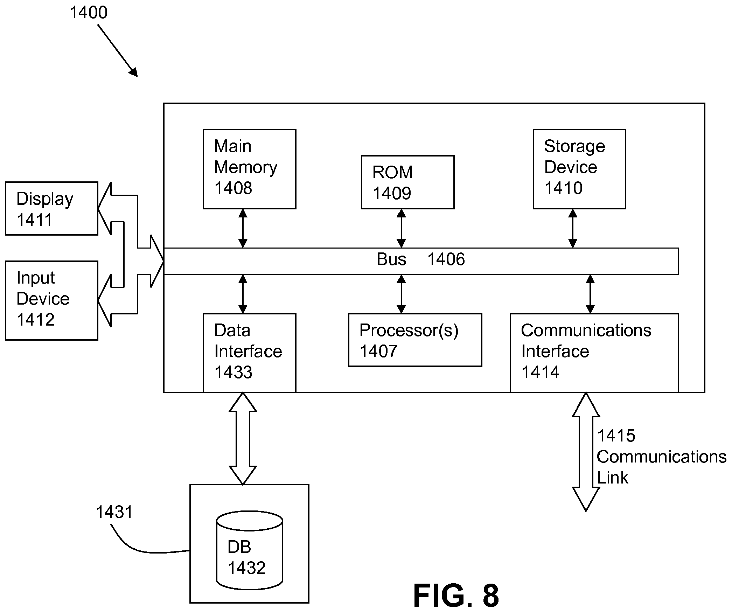

FIG. 8 is a block diagram of an illustrative computing system 1400 suitable for implementing an embodiment of the present invention for performing intrusion detection. Computer system 1400 includes a bus 1406 or other communication mechanism for communicating information, which interconnects subsystems and devices, such as processor 1407, system memory 1408 (e.g., RAM), static storage device 1409 (e.g., ROM), disk drive 1410 (e.g., magnetic or optical), communication interface 1414 (e.g., modem or Ethernet card), display 1411 (e.g., CRT or LCD), input device 1412 (e.g., keyboard), and cursor control. A database 1432 may be accessed in a storage medium using a data interface 1433.

According to one embodiment of the invention, computer system 1400 performs specific operations by processor 1407 executing one or more sequences of one or more instructions contained in system memory 1408. Such instructions may be read into system memory 1408 from another computer readable/usable medium, such as static storage device 1409 or disk drive 1410. In alternative embodiments, hard-wired circuitry may be used in place of or in combination with software instructions to implement the invention. Thus, embodiments of the invention are not limited to any specific combination of hardware circuitry and/or software. In one embodiment, the term "logic" shall mean any combination of software or hardware that is used to implement all or part of the invention.

The term "computer readable medium" or "computer usable medium" as used herein refers to any medium that participates in providing instructions to processor 1407 for execution. Such a medium may take many forms, including but not limited to, non-volatile media and volatile media. Non-volatile media includes, for example, optical or magnetic disks, such as disk drive 1410. Volatile media includes dynamic memory, such as system memory 1408.

Common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer can read.

In an embodiment of the invention, execution of the sequences of instructions to practice the invention is performed by a single computer system 1400. According to other embodiments of the invention, two or more computer systems 1400 coupled by communication link 1415 (e.g., LAN, PTSN, or wireless network) may perform the sequence of instructions required to practice the invention in coordination with one another.

Computer system 1400 may transmit and receive messages, data, and instructions, including program, i.e., application code, through communication link 1415 and communication interface 1414. Received program code may be executed by processor 1407 as it is received, and/or stored in disk drive 1410, or other non-volatile storage for later execution.

In the foregoing specification, the invention has been described with reference to specific embodiments thereof. It will, however, be evident that various modifications and changes may be made thereto. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A computer -implemented method for detecting threats on a network (163), comprising:
separating received network packets into one or more session datasets, wherein a session dataset corresponds to one or more flows;
performing state-based detection on the one or more session datasets to generate first preliminary detection data for a host, wherein the state-based detection detects behavior that is recognized over multiple session datasets over a span of time;
performing stateless detection on the one or more session datasets to generate second preliminary detection data for the host, wherein stateless detection detects behavior in a single session dataset;
receiving the first and second preliminary detection data and determining whether to: (a) report the first or second preliminary detection data by sending the first or second preliminary detection data to a scoring engine or (b) combine the first or second preliminary detection data with other preliminary detection data to provide accumulated preliminary detection data, wherein determining whether to report the first or second preliminary detection data or to combine the first or second preliminary detection data with other preliminary detection data is based at least partly on examining detection type and other detections that have been observed for the host; and
generating a detection data score for the host based on the reported and the accumulated preliminary detection data, wherein the score indicates a certainty of an observed behavior and a threatening nature of the observed behavior.

2. The method of claim 1, further comprising: generating host identifications for a plurality of hosts including said host in the network and managing host scores for the plurality of hosts, wherein the received network packets correspond to the plurality of hosts, wherein each of the host scores are generated at least partly according to the generating step.

3. The method of claim 2, wherein a reporting engine periodically checks whether the host scores have changed, and updates the host scores.

4. The method of claim 1 further comprising:
scoring the reported or accumulated preliminary detection data in conjunction with recent detections of a same detection type for the host.

5. The method of claim 1, further comprising:
rate limiting writing of the reported or accumulated preliminary detection data to a database (604) for one or more detection data types.

6. The method of claim 1, wherein a flow engine uses a zero-copy driver to receive the network packets.

7. The method of claim 1, wherein the state-based detection identifies second preliminary detection data from the one or more session datasets to hold in an accumulation data structure.

8. A system for detecting threats on a network (163), comprising means to implement any of the methods of claims 1-7.

9. A computer program product embodied on a non-transitory computer usable medium, the non-transitory computer readable medium having stored thereon a sequence of instructions which, when executed by a processor causes the processor to execute any of the methods of claims 1-7.

## Patentansprüche

1. Computerimplemetiertes Verfahren zum Detektieren von Bedrohungen in einem Netzwerk (163), Folgendes umfassend:
Trennen von empfangenen Netzwerkpaketen in ein oder mehrere Sitzungsdatensätze, wobei ein Sitzungsdatensatz einem oder mehreren Flüssen entspricht;
Durchführen einer zustandbasierten Detektion an dem einen oder mehreren Sitzungsdatensätzen zum Generieren erster vorübergehender Detektionsdaten für einen Host, wobei die zustandbasierte Detektion Verhalten detektiert, das über mehrere Sitzungsdatensätze hinweg über eine Zeitspanne erkannt wird;
Durchführen einer zustandslosen Detektion an dem einen oder mehreren Sitzungsdatensätzen zum Generieren zweiter vorübergehender Detektionsdaten für einen Host, wobei die zustandslose Detektion Verhalten in einem einzigen Sitzungsdatensatz detektiert;
Empfangen der ersten und zweiten vorübergehenden Detektionsdaten und Bestimmen, ob: (a) die ersten oder zweiten vorübergehenden Detektionsdaten durch Senden der ersten oder zweiten vorübergehenden Detektionsdaten an einen Scoring-Modul zu berichten sind, oder (b) die ersten oder zweiten vorübergehenden Detektionsdaten mit anderen vorübergehenden Detektionsdaten zu kombinieren sind, um kumulierte vorübergehende Detektionsdaten bereitzustellen, wobei das Bestimmen, ob die ersten oder zweiten vorübergehenden Detektionsdaten zu berichten sind, oder die ersten oder zweiten vorübergehenden Detektionsdaten mit anderen vorübergehenden Detektionsdaten zu kombinieren sind, mindestens teilweise auf einem Untersuchungsdetektionstyp und anderer Detektionen basiert, die für den Host beobachtet worden sind; und
Generieren eines Detektionsdatenscores für den Host basierend auf den berichteten und den kumulierten vorübergehenden Detektionsdaten, wobei der Score auf eine Gewissheit eines beobachteten Verhaltens und eine Bedrohungsart des beobachteten Verhaltens hinweist.

2. Verfahren nach Anspruch 1, weiter Folgendes umfassend: Generieren von Hostidentifizierungen für eine Vielzahl von Hosts, einschließlich des Hosts in dem Netzwerk und Verwalten von Hostscores für die Vielzahl von Hosts, wobei die empfangenen Netzwerkpakete der Vielzahl von Hosts entsprechen, wobei jeder der Hostscores mindestens teilweise gemäß dem Generierungsschritt generiert wird.

3. Verfahren nach Anspruch 2, wobei ein Bericht-Modul regelmäßig überprüft, ob sich die Hostscores geändert haben, und die Hostscores aktualisiert.

4. Verfahren nach Anspruch 1, weiter Folgendes umfassend:
Bewerten der berichteten oder kumulierten vorübergehenden Detektionsdaten in Verbindung mit neuesten Detektionen einer selben Detektionsart für den Host.

5. Verfahren nach Anspruch 1, weiter Folgendes umfassend:
ratenbegrenzendes Schreiben der berichteten oder kumulierten vorübergehenden Detektionsdaten auf eine Datenbank (604) für eine oder mehrere Detektionsdatenarten.

6. Verfahren nach Anspruch 1, wobei ein Fluss-Modul einen Zero-Copy-Treiber verwendet, um die Netzwerkpakete zu empfangen.

7. Verfahren nach Anspruch 1, wobei die zustandbasierte Detektion zweite vorübergehende Detektionsdaten aus dem einen oder mehreren Sitzungsdatensätzen identifiziert, die in einer Akkumulationsdatenstruktur zu halten sind.

8. System zum Detektieren von Bedrohungen in einem Netzwerk (163), umfassend Mittel zum Implementieren eines der Verfahren nach den Ansprüchen 1 bis 7.

9. Computerprogrammprodukt, das in einem für einen Computer nicht transitorischen verwendbaren Medium eingesetzt ist, wobei das nicht transitorische computerlesbare Medium darauf eine Reihe von Instruktionen abgelegt aufweist, die, wenn sie von einem Prozessor ausgeführt werden, bewirken, dass der Prozessor eines der Verfahren nach den Ansprüchen 1 bis 7 ausführt.

## Revendications

1. Procédé mis en œuvre par ordinateur pour la détection de menaces sur un réseau (163), comprenant :
la séparation de paquets réseau reçus en un ou plusieurs ensembles de données de session, dans lequel un ensemble de données de session correspond à un ou plusieurs flux ;
l'exécution d'une détection basée sur l'état sur les un ou plusieurs ensembles de données de session pour générer des premières données de détection préliminaires pour un hôte, dans lequel la détection basée sur l'état détecte un comportement qui est reconnu sur de multiples ensembles de données de session sur une période de temps ;
l'exécution d'une détection sans état sur les un ou plusieurs ensembles de données de session pour générer des secondes données de détection préliminaires pour l'hôte, dans lequel la détection sans état détecte un comportement dans un seul ensemble de données de session ;
la réception des premières et secondes données de détection préliminaires et la détermination si : (a) rapporter les premières ou les secondes données de détection préliminaires en envoyant les premières ou les secondes données de détection préliminaires à un module de notation ou (b) combiner les premières ou les secondes données de détection préliminaires avec d'autres données de détection préliminaires pour fournir des données de détection préliminaires accumulées, dans lequel la détermination si rapporter les premières ou les secondes données de détection préliminaires ou combiner les premières ou les secondes données de détection préliminaires avec d'autres données de détection préliminaires est basée au moins en partie sur l'examen d'un type de détection et d'autres détections qui ont été observées pour l'hôte ; et
la génération d'une note de données de détection pour l'hôte sur la base des données de détection préliminaires rapportées et accumulées, dans lequel la note indique une certitude d'un comportement observé et une nature menaçante du comportement observé.

2. Procédé selon la revendication 1, comprenant en outre : la génération d'identifications d'hôte pour une pluralité d'hôtes incluant ledit hôte dans le réseau et la gestion de notes d'hôte pour la pluralité d'hôtes, dans lequel les paquets réseau reçus correspondent à la pluralité d'hôtes, dans lequel chacune des notes d'hôte est générée au moins en partie en fonction de l'étape de génération.

3. Procédé selon la revendication 2, dans lequel un module de rapport contrôle périodiquement si les notes d'hôte ont changé et met à jour les notes d'hôte.

4. Procédé selon la revendication 1, comprenant en outre :
la notation des données de détection préliminaires rapportées ou accumulées conjointement à des détections récentes d'un même type de détection pour l'hôte.

5. Procédé selon la revendication 1, comprenant en outre :
l'écriture à limitation de débit des données de détection préliminaires rapportées ou accumulées dans une base de données (604) pour un ou plusieurs types de données de détection.

6. Procédé selon la revendication 1, dans lequel un module de flux utilise un gestionnaire zéro copie pour recevoir les paquets réseau.

7. Procédé selon la revendication 1, dans lequel la détection basée sur l'état identifie des secondes données de détection préliminaires à partir des un ou plusieurs ensembles de données de session pour conserver dans une structure de données d'accumulation.

8. Système de détection de menaces sur un réseau (163) comprenant des moyens pour mettre en œuvre l'un quelconque des procédés selon les revendications 1 à 7.

9. Produit de programme informatique incorporé sur un support utilisable par ordinateur non transitoire, le support utilisable par ordinateur non transitoire ayant une séquence d'instructions stockée dessus qui, quand elle est exécutée par un processeur, amène le processeur à exécuter l'un quelconque des procédés selon les revendications 1 à 7.
